# EUROPEAN PATENT APPLICATION

(11) **EP 2 320 345 A2**
(43) Date of publication of application: **11.05.2011**
(21) Application number: 11001172.3
(22) Date of filing: 13.09.2006
(51) Int. Cl.: G06F 21/00

(54) **Hardware driver integrity check of memory card controller firmware**

(30) Priority: 14.09.2005 US 717347 P; 21.11.2005 US 284623; 21.11.2005 US 285600
(62) Divisional of application: 06814655.4
(71) Applicant: Sandisk Corporation, Milpitas, CA 95035 (US)
(72) Inventor: Holtzmann, Michael, Cupertino, CA 95014 (US); Barzilai, Ron, Kfar-vradim 25147 (IL); Elhamias, Reuven, Kfar-vradim 25147 (IL); Cohen, Niv, 12135 (IL)
(74) Representative: Hitchcock, Esmond Antony

(57) **Abstract**

A memory system comprises an encryption engine implemented in the hardware of a controller. In starting up the memory system, a boot strapping mechanism is implemented wherein a first portion of firmware when executed pulls in another portion of firmware to be executed. The hardware of the encryption engine is used to verify the integrity of at least the first portion of the firmware. Therefore, only the firmware that is intended to run the system will be executed.

## Description

### FIELD OF THE INVENTION

The invention generally relates to memory cards with secure content and encryption of that content, and in particular relates to verifying the integrity of the firmware that runs secure memory cards.

### BACKGROUND OF THE INVENTION

It is crucial to be able to verify the functionality of commercially available memory cards before they leave the factory, and to ensure that the cards are secure from hackers once they leave the factory. With the advent of digital rights management and the spread of protected content such as music and movies etc... there is a need to ensure that the contents of the card cannot be freely copied. One way a hacker may attempt to do this is to alter or even replace the firmware that runs the memory card in order to be able to pirate the contents of the card. Thus it is essential to provide a system that ensures both the integrity and the reliability of the firmware running on the card at all times.

### SUMMARY OF INVENTION

Verifying the integrity of the firmware is an important aspect of running a secure and reliable memory card. The present invention verifies the integrity of firmware that runs a memory card, universal serial bus (USB) flash drive, or other memory system. The integrity of the firmware is verified before it is executed. This prevents the execution of firmware that is not the factory firmware from being executed. This is particularly important because the factory firmware comprises security mechanisms including encryption algorithms that are meant to protect content from being freely copied. The present invention when implemented in a memory card prevents the card from running non-factory firmware or altered factory firmware that may allow copying of secure content. Thus a hacker cannot "trick" the card into running the wrong firmware. The verification process can also be used to verify the integrity of any stored data.

One aspect of the present invention involves a method for starting operation of a memory storage device, comprising providing firmware in a mass storage unit of the device, passing the firmware though an encryption engine, calculating hash values for the firmware with said encryption engine, comparing the calculated hash values with stored hash values, and executing the firmware if the computed hash values match the stored hash values.

Another aspect of the present invention involves a mass storage device comprising flash memory, read only memory, a first set of instructions that control data storage operations of the mass storage device, the first set stored in the flash memory, a second set of instructions that shadows the first set of instructions from the flash to an executable random access memory, the second set residing in the read only memory. An encryption engine is implemented in the hardware circuitry of the mass storage device and is capable of encrypting and decrypting data to be stored in and read from the flash memory. The encryption engine is operable to verify the integrity of the first set of instructions.

Yet another aspect of the present invention involves another method for starting operation of a memory storage device. The method comprises providing firmware in a mass storage unit of the device and executing a first set of instructions in a read only memory that copy the firmware from the mass storage unit to a random access memory. It also comprises verifying the integrity of the booting firmware using an encryption engine, and after the integrity is verified, executing the firmware from the random access memory with a microprocessor.

Additional aspects, advantages and features of the present invention are included in the following description of exemplary examples thereof, which description should be taken in conjunction with the accompanying figures, and wherein like numerals are used to describe the same feature throughout the figures, unless otherwise indicated. All patents, patent applications, articles and other publications referenced herein are hereby incorporated herein by this reference in their entirety for all purposes.

### BRIEF DESCRIPTION OF THE DRAWINGS

FIG. 1A is a schematic diagram of system 10 according to an embodiment of the present invention.

FIG. 1B is a schematic diagram of system 10 according to another embodiment of the present invention.

FIG. 2 is a diagram of the memory space of the flash memory seen in FIG. 1.

FIG. 3 is a schematic illustration of the boot loader 200a.

FIG. 4 is a flowchart of a portion of the booting process including a hardware based integrity check of the firmware.

FIG. 5 is a flowchart of the integrity verification process 410 of FIG. 4.

FIG. 6 is a flowchart of the hardware loop during booting.

FIG. 7 is a flowchart of the firmware loop during booting.

### DETAILED DESCRIPTION OF THE PREFERRED EMBODIMENTS

A Message Authentication Code ("MAC") is a number computed from some content (or message) that is used to prove the integrity of the content. Its purpose is to detect if the content has been altered. A Message Authentication Code is a hash computed from a message and some secret data. It is difficult to forge without knowing the secret data. The MAC is computed using an algorithm based on the DES or AES ciphers, which use a secret key. The MAC is then stored or sent with the message. The recipient recomputes the MAC using the same algorithm and secret key and compares it to the one that was stored or sent. If they are the same, it is assumed that the content or message has not been tampered with.

DES (Data Encryption Standard) is a NIST-standard cryptographic cipher that uses a 56-bit key. Adopted by the NIST in 1977, it was replaced by AES in 2001 as the official standard. DES is a symmetric block cipher that processes 64-bit blocks in four different modes of operation, with the electronic code book (ECB) being the most popular.

Triple DES increased security by adding several multiple-pass methods; for example, encrypting with one key, decrypting the results with a second key and encrypting it again with a third. However, the extra passes add considerable computing time to the process. DES is still used in applications that do not require the strongest security.

The Advanced Encryption Standard ("AES") is a NIST-standard cryptographic cipher that uses a block length of 128 bits and key lengths of 128, 192 or 256 bits. Officially replacing the Triple DES method in 2001, AES uses the Rijndael algorithm developed by Joan Daemen and Vincent Rijmen of Belgium. AES can be encrypted in one pass instead of three, and its key size is greater than Triple DES's 168 bits.

The Secure Hash Algorithm (SHA-1) produces a 20-byte output. NIST and NSA designed it for use with the Digital Signature Standard and it is widely used now. MD5 is another hash function that may be employed with the present invention. The aforementioned standards and various other algorithms are illustrative examples of hash functions and values that may be utilized with the present invention. Other types of hash functions and values available today and developed in the future can be utilized with the present invention.

Although the aforementioned standards and various other algorithms and/or standards are well known to those skilled in cryptography, the following publications are informative and are hereby incorporated by reference in their entireties: *RFC 3566 - The AES-XCBC-MAC-96 Algorithm and Its Use With IPsec* by Sheila Frankel, NIST - National Institute of Standards and Technology, 820 West Diamond Ave, Room 677, Gaithersburg, MD 20899, available at http://www.faqs.org/rfcs/rfc3566.html; *Performance Comparison of Message* Authentication Code (MAC) Algorithms for the Internet Protocol Security (IPSEC) by Janaka Deepakumara, Howard M. Heys and R. Venkatesan, Electrical and Computer Engineering, Memorial University of Newfoundland, St. John's, NL, Canada,A1B3S7 available at http://www.engr.mun.ca/∼howard/PAPERS/necec_2003b.pdf; and Comments to NIST concerning AES Modes of Operations: A Suggestion for Handling Arbitrary-Length Messages with the CBC MAC by John Black, University of Nevada, Reno, Phillip Rogaway, University of California at Davis, available at http://csrc.nist.gov/CryptoToolkit/modes/proposedmodes/xcbc-mac/xcbc-mac-spec.pdf.

### MEMORY SYSTEM ARCHITECTURE

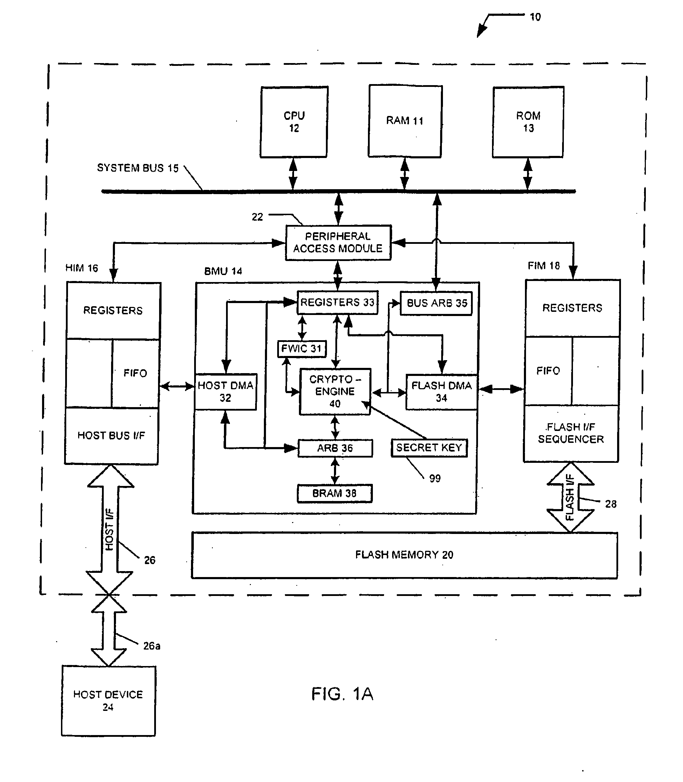

An example memory system in which the various aspects of the present invention may be implemented is illustrated by the block diagram of Fig. 1A. As shown in Fig. 1A, the memory system 10 includes a central processing unit (CPU) or "controller" 12, a buffer management unit (BMU) 14, a host interface module (HIM) 16, flash interface module (FIM) 18, a flash memory 20 and a peripheral access module 22. Memory system 10 communicates with a host device 24 through a host interface bus 26 and port 26a. The flash memory 20, which may be of the NAND type, provides data storage for the host device 24. The software code for CPU 12 may also be stored in flash memory 20. FIM 18 connects to the flash memory 20 through a flash interface bus 28 and in some instances a port, which is not shown, if the flash memory 20 is a removable component. HIM 16 is suitable for connection to a host system like a digital camera, personal computer, personal digital assistant (PDA) and MP-3 players, cellular telephone or other digital devices. The peripheral access module 22 selects the appropriate controller module such as FIM, HIM, and BMU for communication with the CPU 12. In one embodiment, all of the components of system 10 within the dotted line box may be enclosed in a single unit such as in a memory card and preferably enclosed in the card.

The buffer management unit 14 comprises a host direct memory access unit (HDMA) 32, a flash direct memory access unit (FDMA) 34, an arbiter 36, a CPU bus arbiter 35, registers 33, firmware integrity circuitry (FWIC) 31, buffer random access memory (BRAM) 38, and a crypto engine 40 also referred to as encryption engine 40. The arbiter 36 is a shared bus arbiter so that only one master or initiator (which can be HDMA 32, FDMA 34 or CPU 12) can be active at any time and the slave or target is BRAM 38. The arbiter is responsible for channeling the appropriate initiator request to BRAM 38. HDMA 32 and FDMA 34 are responsible for data transported between HIM 16, FIM 18 and BRAM 38 or the RAM 11. The CPU bus arbiter 35 allows for direct data transfer from crypto engine 40 and flash DMA 34 to RAM 11 via system bus 15, which is used in certain situations such as for example when it is desired to bypass the crypto engine. The operation of the HDMA 32 and of the FDMA 34 are conventional and need not be described in detail herein. The BRAM 38 is used to store data passed between the host device 24 and flash memory 20. The HDMA 32 and FDMA 34 are responsible for transferring the data between HIM 16/FIM 18 and BRAM 38 or the CPU RAM 12a and for indicating sector completion.

When data from flash memory 20 is read by the host device 24, encrypted data in memory 20 is fetched through bus 28, FIM 18, FDMA 34, and crypto engine 40 where the encrypted data is decrypted and stored in BRAM 38. The decrypted data is then sent from BRAM 38, through HDMA 32, HIM 16, and bus 26 to the host device 24. The data fetched from BRAM 38 may again be encrypted by means of crypto engine 40 before it is passed to HDMA 32 so that the data sent to the host device 24 is again encrypted but by means of a different key and/or algorithm compared to those whereby the data stored in memory 20 is encrypted. Alternatively, rather than storing decrypted data in BRAM 38 in the above-described process, which data may become vulnerable to unauthorized access, the data from memory 20 may be decrypted and encrypted again by crypto engine 40 before it is sent to BRAM 38. The encrypted data in BRAM 38 is then sent to host device 24 as before. This illustrates the data stream during a reading process.

When data is written by host device 24 to memory 20, the direction of the data stream is reversed. For example if unencrypted data is sent by host device, through bus 26, HIM 16, HDMA 32 to crypto engine 40, such data may be encrypted by engine 40 before it is stored in BRAM 38. Alternatively, unencrypted data may be stored in BRAM 38. The data is then encrypted before it is sent to FDMA 34 on its way to memory 20.

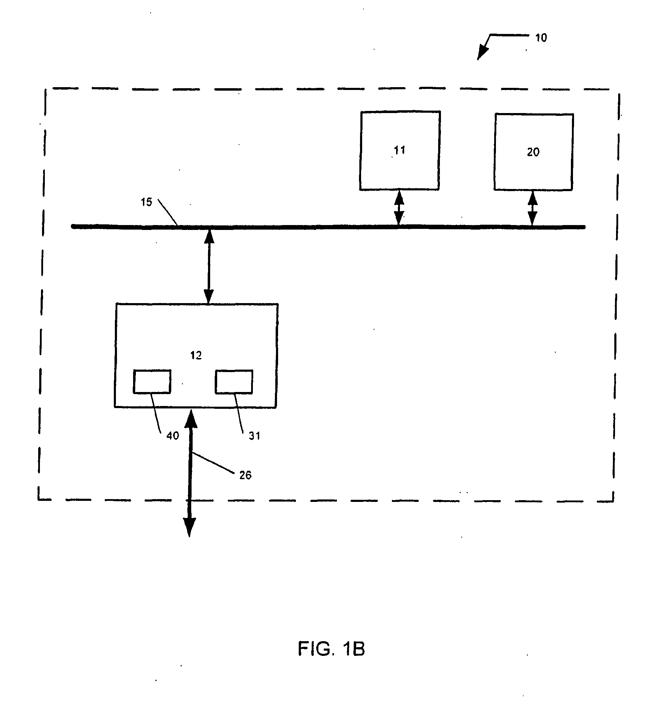

FIG. 1B illustrates another embodiment of system 10. In this preferred embodiment, the encryption engine 40 and firmware integrity circuit 31 are shown as part of controller 12. While it is preferred that these components are part of the controller, they may in certain embodiments not be integrated in the controller package. As described previously, RAM 11, flash memory 20, and controller 12 are all connected to system bus 15. Host interface bus 26 communicates with the host device 24 (not shown).

### FIRMWARE INTEGRITY VERIFICATION

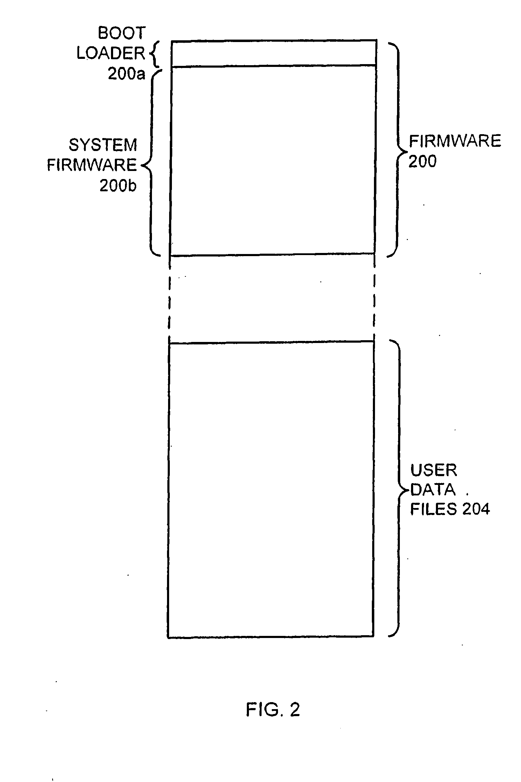

FIG. 2 is an illustration of the memory space of the flash memory that includes firmware 200 that runs system 10. The system firmware 200 comprises a boot loader (BLR) portion 200a that resides in flash memory 20 and is preferably not changeable, and system firmware 200b that resides in flash memory 20 and can be changed from time to time if necessary. Additional firmware may, in some embodiments, be present in ROM 13 that points to BLR portion 200a when it is executed directly or from a shadowed copy. The size of system firmware 200 is larger than the RAM module it is executed from, so the system firmware is divided into smaller portions referred to as overlays. Integrity verification of the BLR in the preferred embodiments utilizes a unique on the fly calculation where the expected values are stored in the data itself and a copy is temporarily stored in registers in a memory other than the flash memory 20. However, in certain embodiments, the technique used to verify the integrity of the BLR can be used to verify the integrity of the system firmware 200b. As mentioned previously, any hash value and hashing technique can be used, but MAC or SHA-1 values are currently preferable, and for simplicity the use of one or the other values will be described in a preferred embodiment. Generally, SHA-1 digests may alternatively be used in place of MAC values, and vice versa. The advantage of using MAC values is that they are associated with the hardware and the key of the hardware that created them. While SHA-1 values can be created for a given data set simply based upon the data itself, MAC values cannot be recreated without the key, and thus provide for more robust security. Specifically, because key 99 stored in the non volatile memory of encryption engine 40 must be used to create the MAC values, another processor cannot be utilized to recreate the MAC values. For example, a hacker cannot use another processor outside of the system to duplicate the firmware and the associated MAC values.

Also stored within the flash memory are various user data files 204. Various other programs and data that are not shown may be stored within the flash memory (not shown). These files may also be encrypted and the integrity verified in a similar or other fashion.

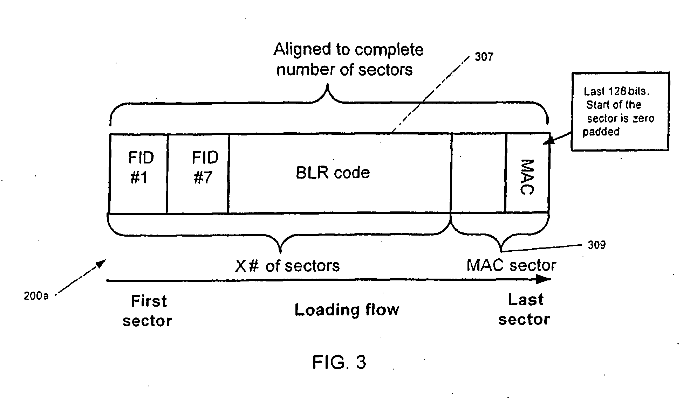

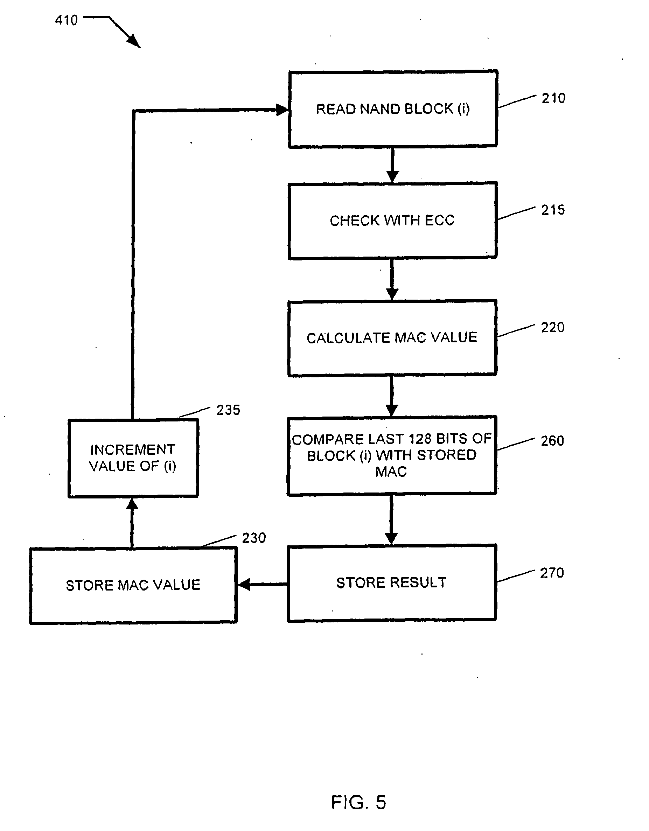

FIG. 3 illustrates the structure of some data sectors utilized by system 10 when in integrity check mode. The BLR, in particular, preferably utilizes this structure. The BLR code 307 itself is seen sandwiched between other data to make up the BLR 201a. Before the BLR code 307 is loaded, some configuration information is loaded. The configuration information is contained in the file identification (FID) sectors 1 and 7. The BLR code 307 is followed by the message authentication code sector 309. Within MAC sector 309 is the MAC value for the corresponding portion of the BLR code 307. This is the MAC value compared with the value calculated in FIG. 5, which is discussed in greater detail below. The MAC sector is zero padded to accommodate data of varying lengths so that the MAC always occupies the last 128 bits of the sector. The BLR code 307 is stored in flash memory 20 in the BLR portion 200a, and the configuration information may also be stored in flash memory 20.

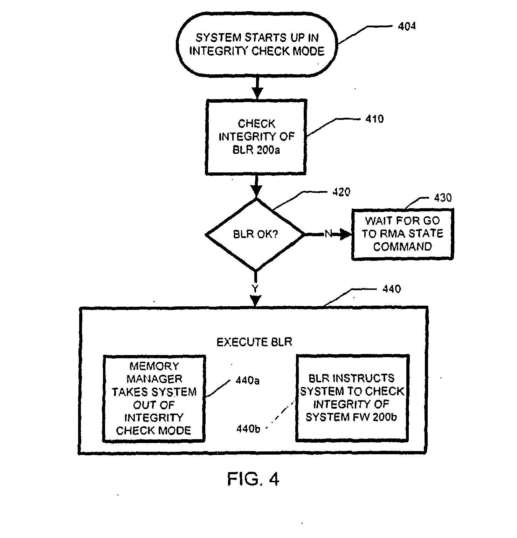

FIG. 4 illustrates the processes of booting and running system 10 including verifying the integrity of the BLR code and the firmware. In particular, FIG. 4 includes a general overview of the integrity verification process as related to the BLR portion 200a of the firmware 200. In a preferred embodiment, verification of the system firmware 200b and application firmware is separate from verification of the BLR and takes place after that verification. It is noteworthy that the firmware is not loaded all at once by the BLR. The BLR loads a few modules only (the RAM resident firmware) and other modules (the overlays) are loaded on a per need basis and swapped into the same location(s) in the RAM.

When system 10 starts up it will start up in integrity check mode, as seen in step 404. Generally speaking, in this mode the crypto engine 40 is calculating the MAC value of all incoming data as discussed above and illustrated in detail in FIG. 5. This process ensures that the incoming data can be of variable length and stored in arbitrary locations in the NAND flash memory 20. In the preferred embodiment the data will be read in the same order it was written and the last block read will contain the MAC. The result of the MAC comparison is available for the firmware to check at any time. The individual steps seen in FIG. 4 will now be described.

In step 410, the system checks the integrity of the BLR, again according to the process seen in detail in the flowchart of FIG. 5. This is done, as the BLR passes through crypto engine 40, in the same way other data from flash memory 20 is verified (while the system is in integrity check mode). In step 420 the system checks the result of the integrity check performed in step 410. This is done by checking the results (flags or other indicators) stored in step 270 of the integrity check of process 200 seen in FIG. 5, which indicates whether there is a problem or not. If the BLR is not OK, the system will wait for a host command as seen in step 430 to send the system into a failure analysis state known as the return merchandise authorization (RMA) state. For more detail on this and other operating states or modes, please refer to a co-pending U.S. Patent Application No 11/053,273 entitled "SECURE MEMORY CARD WITH LIFE CYCLE PHASES" to Holtzman et al., which is hereby incorporated by this reference in its entirety. If, however the BLR is OK, the system will execute the BLR in step 440. When booting is finished, the system will leave the integrity check mode based upon instructions contained in the BLR itself, as seen in step 440 of FIG. 4. The BLR comprises numerous instructions or "steps." Among them are step 440a, where the BLR reconfigures the crypto engine 40 to normal mode, or in other words takes the crypto engine 40 out of the integrity check mode. The BLR also contains instructions, as represented by step 440b, that cause the system to check the integrity of system firmware 200b.

FIG. 5 is a flow chart of integrity verification process 410, as discussed with regard to FIG. 4. It illustrates the general process of reading and hashing data that is stored in flash memory 20 when the system is in integrity check mode. While the reading of NAND type flash memory will be described for exemplary purposes, the present invention can be used with any type of memory or media used for mass storage purposes. Again, while the use of MAC values is illustrated and described, other hash values may also be used. The table of FIG. 2B will generally include the corresponding start byte and number of bytes for each entry (not shown). Generally speaking, the overall process, in the preferred embodiment, is used to verify the integrity of the NAND on a page by page basis. The process will verify the integrity of any data stored in the NAND. When the data happens to be the firmware, the firmware integrity is verified. While this page by page comparison is preferred, a smaller or larger unit of comparison may be made.

The integrity verification process in a preferred embodiment utilizes a unique calculation and control loop as shown in FIG. 5. The loop involves a continuous calculation and comparison operation. Typically in verification schemes, some type of "correct" or expected value is pre-stored and compared with a calculated value. In a preferred embodiment having the process shown in FIG. 5, the "correct" or expected value is stored within the "data under test" itself. Specifically, in the preferred embodiments described, it is in the last 128 bits of the data blocks. The last 128 bits of the sector being read will, for practical purposes, only correspond to the stored MAC (or other hash value) once, when the correct sector is read. The very small probability that a (false positive) match will occur on a page other than the last can be discounted for practical purposes.

In step 210, NAND block (*i*) is read. Next in step 215, the block is checked and optionally corrected if necessary with ECC circuitry. ECC is well known and can be used to correct physical errors in the data. While the use of ECC in conjunction with the integrity verification process is preferable, it is not essential, and the integrity is verified with or without the inclusion of step 215. It step 220 the hash value, preferably the MAC value in a preferred embodiment, is calculated. Although the MAC for block (*i*) is calculated, in integrity verification process 410, the resulting MAC covers blocks 0 to (*i*) and can be expressed mathematically as:

MAC [0...(*i*)] = MAC[MAC[0...(*i*-1)], block (*i*)].

After calculating in step 220, a comparison is performed in step 260. In step 260, the hardware of the controller, FWIC 31 in particular, compares the last 128 bits of block (*i*) with the previously stored MAC, that is, the MAC [0...(*i*-1)]. In step 270, the result of the comparison is stored in a memory of the system. The first time the comparison of step 260 is performed, the "stored" value in the MAC register will not actually be an appropriate stored MAC value, but will be whatever value happens to be in the register, and can therefore be thought of as random. The result of the comparison will then be stored in step 270. For the first block, the comparison will not be checked. In step 230, the MAC value calculated in step 220 will be stored in a register of the controller, preferably in a register of FWIC 31. Next in step 235, a counter will be incremented so that the value of (i) is incremented by one and the next block will again be read in step 210. The loop will continue until all blocks (i) are read. When the last block is read, and thus processed by the encryption engine, if the last 128 bits match the MAC stored in step 230, the comparison will yield a match and the result stored in step 270 will reflect that the integrity has been verified by the hardware. Only when the last page of the BLR has been read will a match be used to indicate that the integrity has been verified. All previous matches (false true values) will be ignored. If the values are different this would indicate that there is a problem with the integrity of the data. Conversely, if the values are the same then the integrity of the data is assured.

After a match has occurred, the MAC value will again be updated in step 230, but this is a redundant operation of the loop that has no effect. This continuous calculation process allows the hardware to verify undefined content size. In other words, the MAC values can be properly calculated and the integrity verified by the hardware without having to first ascertain the number of blocks or the size of the file comprised by the blocks.

The process described above is used in certain operating states or modes, in particular the integrity check mode, for any data resident in the flash memory 20 of the memory card. In a preferred embodiment of a memory card according to the present invention, some of that data is firmware that runs the memory card when executed. In particular, at power up of system 10, when the system is in its regular operating state or test state, crypto engine 40 initializes itself (by starting in integrity check mode) to verify the integrity of any incoming data. When the data happens to be the firmware, the integrity of the firmware is verified as it passes through BMU 14 and in particular crypto engine 40. The stored result (not the integrity itself) can be checked by software, which in one embodiment involves instructions in the code stored in ROM 13. It should be noted that although the code stored in ROM 13 checks the result, and may initiate the flow of data, it is not involved in verifying the integrity of the firmware in the flash memory. In other words, the code is not responsible for performing any numerical calculations or data manipulation of the firmware in order to verify it. It is the hardware of the controller 12 or BMU 14, FWIC 31, and crypto engine 40 that verifies the integrity of the firmware, including the boot loader (BLR) portion and in some embodiments other portions of the firmware.

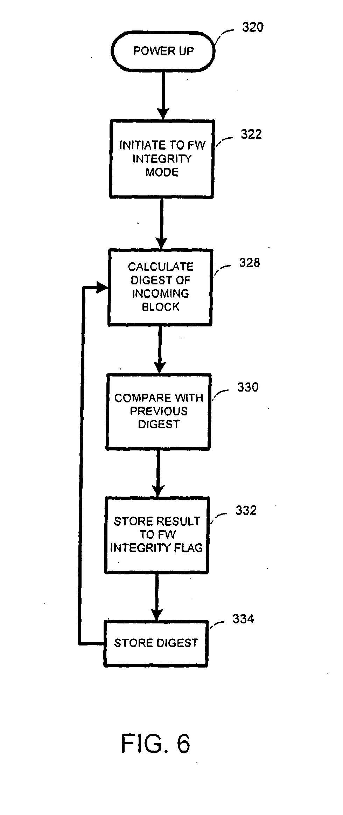

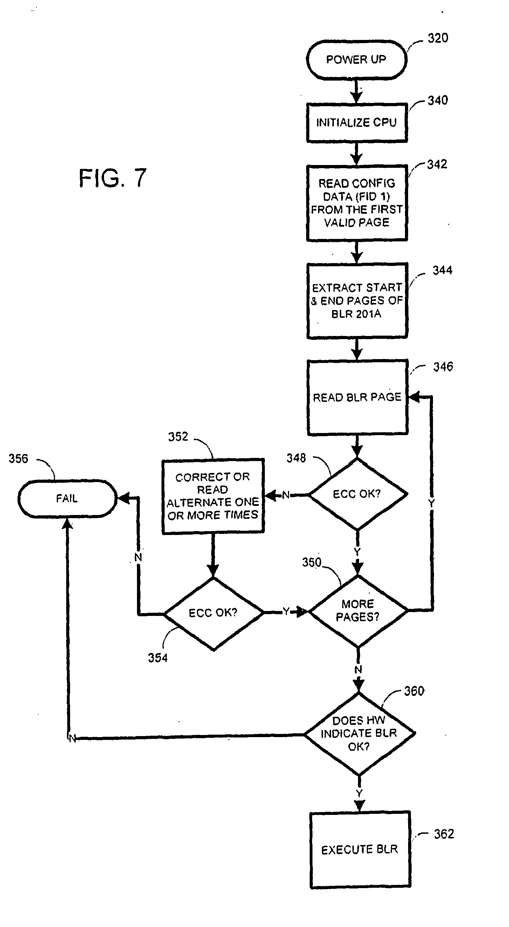

The process described in FIG. 5 involves both the hardware (HW) and the firmware (FW). As was mentioned, the hardware carries out the integrity check, while the firmware simply checks the flag set at the end of the HW integrity check. The HW and SW functions or "loops" are shown in more detail in FIGS. 6 and 7 respectively.

Referring to FIG. 6 the system is powered up in step 320. In step 322 the controller hardware initiates FW integrity mode. This comprises two central activities. The first is activating FWIC 31 of FIG. 1. FWIC 31 once activated will orchestrate the remaining steps of FIG. 6 and thereby check the integrity of the BLR portion of the firmware, together with crypto engine 40. The second activity involves selecting a cryptographic algorithm for use by crypto engine 40. As mentioned previously, the hardware of crypto engine 40 is configured to encrypt and decrypt data with various different algorithms.

In step 328 the controller hardware calculates the digest of the incoming block. This calculation is performed by crypto engine 40. Next, in step 330 the digest calculated in step 328 is compared with the value of the previous digest. As discussed earlier, the register that holds the value will be checked and compared in every iteration of the loop, but on the first iteration, the value in the register will be random. A flag indicative of the integrity is then set in step 332. It is this flag that will be checked by the firmware of the system, in order to confirm that the HW has verified the integrity of the BLR portion of the firmware.

FIG. 7 illustrates the firmware loop taking place while the HW checks the integrity in FIG. 6. In step 340 the CPU is initialized, after the system is powered up in step 320. The configuration data (which in a preferred embodiment is FID 1 of FIG. 3) is then read from the first valid page in step 342. Next, in step 344 the system extracts the start and end pages of the BLR 201A. Once this is known, all of the BLR pages are read. As each page is read error correction codes (ECC's) are generated. As mentioned previously, ECC circuitry operation is well known and can be used to correct physical errors in the data, up to a certain limit. While the use of ECC in conjunction with the integrity verification process is preferable, it is not essential, and the integrity is verified with or without use of ECC. After a page is read it is checked with the ECC circuitry in step 348 and, if it is not OK the page will be corrected with ECC correction mechanisms or an alternate page will be retrieved in step 352. If it is determined that the corrected or new page is OK in step 354 then the system will check to see if there are more pages to be read in step 350. If this is the case, then the system will return to step 346 and read another page. If step 354 indicates that the corrected or alternate copy is not OK in step 354 a failure condition will be indicated in step 356. If there are no more pages as determined in step 350, and a failure is not indicated, the system will check the integrity flag (that was set by the hardware as seen in FIG. 6) in step 360. If the flag indicates the BLR is OK in step 360, as was verified by the HW, the BLR will be executed in step 362. This execution is the same as that depicted in step 440 of FIG. 4.

While this integrity check is performed for only a portion of the firmware, namely the BLR, it should be understood that all of the firmware could also be checked this way, and that this explanation relates to a preferred embodiment that employs firmware bootstrapping. Additionally, the term memory card, as used in this application, is meant to also encompass the form factor of a USB flash drive.

Although the various aspects of the present invention have been described with respect to exemplary embodiments thereof, it will be understood that the present invention is entitled to protection within the full scope of the appended claims.

Further embodiments are set out in the following clauses:
1. A memory card comprising: flash memory cells; a controller having encryption hardware; random access memory; and firmware stored in the flash memory that controls writing data to and reading data from the flash memory cells; wherein the integrity of the firmware is verified with encryption values calculated by the controller encryption hardware as the firmware is uploaded to the random access memory.
2. The memory card of clause 1 wherein the memory card further comprises instructions for checking a flag at the end of an initial booting process indicating that the firmware integrity has been verified.
3. The memory card of clause 1 wherein the integrity of the firmware is verified with hash values calculated as the firmware is uploaded to the random access memory.
4. The memory card of clause 1 wherein verifying the integrity of the firmware comprises utilizing MAC values for the firmware.
5. The memory card of clause 1 wherein the flash memory cells are of the NAND variety, and wherein an intermediate MAC value is calculated for a group of NAND pages.
6. The memory card of clause 5 wherein verifying the integrity further comprises comparing the MAC value for the group of pages with a MAC value stored in another page or group of pages.
7. The memory card of clause 1 wherein the firmware comprises a boot-loader portion and a main portion.
8. The memory card of clause 7, wherein the integrity of the boot loader portion is verified with encryption values calculated by the controller encryption hardware as the system level firmware is uploaded to the random access memory.
9. The memory card of clause 1 wherein the controller comprises a firmware integrity circuit that manages the integrity check of the firmware.
10. The memory card of clause 1 wherein verifying the integrity of the firmware comprises utilizing SHA-I values for the firmware.
11. A portable flash memory storage device comprising: flash memory; data residing in the flash memory, wherein the data comprises user files and firmware, and
   wherein a portion of the data may be stored in an encrypted format; and a cryptographic engine that performs data manipulation comprising encrypting data on route to the flash memory and decrypting data from the flash memory, wherein the cryptographic engine data manipulations also serve to verify the integrity of the firmware.
12. A mass storage device comprising: flash memory; a set of instructions that control data storage and retrieval operations of the mass storage device, said first set stored in the flash memory; and an encryption engine implemented in hardware circuitry of the mass storage device, said encryption engine encrypting and decrypting data stored in and read from the flash memory, said encryption engine operable to verify the integrity of the set of instructions.
13. The mass storage device of clause 12 wherein the set of instructions does not comprise instructions that verify the integrity of at least a portion of the instructions.
14. The mass storage device of clause 12 wherein the set of instructions comprises instructions for checking the status of an indicator, said indicator indicating whether or not the integrity of the set of instructions has been verified.
15. A mass storage device comprising: flash memory; means for controlling data storage operations of the mass storage device; means for encrypting and decrypting data; and means for verifying the integrity of the means for controlling data storage operations with the means for encrypting and decrypting data.
16. A memory card comprising: a mass storage medium comprising flash memory; read only memory; firmware; code residing in the read only memory; and a cryptographic engine, wherein the cryptographic engine is used to verify the integrity of the firmware.
17. The memory card of clause 16 wherein the read only memory and the code residing in the read only memory are not used to verify the integrity of at least a portion of the firmware.
18. The memory card of clause 17 wherein a portion of the firmware not verified by the read only memory comprises a boot loader.
19. The memory card of clause 16 wherein the code comprises instructions to load a boot loader portion of the firmware into a random access memory.
20. The memory card of clause 17 wherein the code comprises instructions to check a hardware flag indicative of the integrity of a boot loader portion of the firmware that was verified using the cryptographic engine.
21. A method for starting operation of a memory storage device comprising: providing firmware in a mass storage unit of the device; passing said firmware though an encryption engine; calculating hash values for said firmware with said encryption engine; comparing the calculated hash values with stored hash values; and executing said firmware if said computed hash values match said stored hash values.
22. A method for starting operation of a memory storage device, comprising: providing firmware in a mass storage unit of the device; executing a first set of instructions in a read only memory that copy the firmware from the mass storage unit to a random access memory; verifying the integrity of the firmware using an encryption engine; and after the integrity is verified, executing the firmware from a random access memory with a microprocessor.
23. The method of clause 22, wherein said firmware contains instructions to fetch additional firmware from the mass storage unit.
24. The method of clause 23, wherein the method further comprises executing the additional firmware.

## Claims

1. A method for starting operation and operating a memory storage device comprising:
providing firmware of the memory storage device in a mass storage unit of the memory storage device;
passing said firmware through a hardware implemented encryption engine of the memory storage device;
calculating hash values for said firmware with said hardware implemented encryption engine;
comparing the calculated hash values with stored hash values; and
executing said firmware if said computed hash values match said stored hash values.

2. The method of claim 1, wherein providing the firmware comprises providing a plurality of firmware overlays.

3. The method of claim 2, further comprising, storing, within each overlay of the plurality, a hash value expected to equal a calculated hash value of a quantity of the firmware that includes the overlay containing the hash.

4. The method of claim 3, wherein the calculated hash value of the quantity being read will only correspond to expected hash value when a sector containing the expected hash value is read.

5. The method of claim 3 further comprising disregarding false positive matches on a sector block or page other than the sector block or page containing the expected hash value.

6. The method of claim 1, wherein calculating hash values comprises calculating a MAC value for a block (i), but wherein the resulting MAC value covers blocks 0 to (i), such that MAC [0...(i)] = MAC[MAC[0...(i-1)], block (i)].

7. The method of claim 6, further comprising storing the calculated MAC value for block (i) in a register of a memory controller of the memory storage device, said register not in the mass storage unit.

8. The method of claim 6, wherein calculating the hash value for a block (i), wherein the resulting MAC value covers blocks 0 to (i), such that MAC [0... (i)]=MAC[MAC[0...(i-1)], block (i)] is done for a boot loader of the firmware.

9. The method of claim 6, wherein calculating the hash value for a block (i), wherein the resulting MAC value covers blocks 0 to (i), such that MAC [0... (i)]=MAC[MAC[0...(i-1)], block (i)] is done for a boot loader of the firmware, but not the entire firmware.

10. The method of claim 6, wherein calculating the hash value for a block (i), wherein the resulting MAC value covers blocks 0 to (i), such that MAC [0... (i)]=MAC[MAC[0...(i-1)], block (i)]is done for the entire firmware.

11. A memory storage device comprising:
a mass storage unit comprising firmware of the memory storage device;
a hardware implemented encryption engine, wherein the memory storage device is operative to pass said firmware through said hardware implemented encryption engine and to calculate hash values for said firmware with said hardware implemented encryption engine;
wherein the memory storage device is operative to compare the calculated hash values with stored hash values and to execute said firmware if said computed hash values match said stored hash values.
